(19) Europäisches Patentamt
European Patent Office
Office européen des brevets

(11) EP 0 590 389 B1

(12) EUROPÄISCHE PATENTSCHRIFT

(45) Veröffentlichungstag und Bekanntmachung des Hinweises auf die Patenterteilung:
**07.01.1998 Patentblatt 1998/02**

(51) Int Cl.$^6$: **C08L 57/00**, C08K 13/02, C08K 3/34, C08K 5/523
// (C08K13/02, 3:34, 5:52)

(21) Anmeldenummer: **93114574.2**

(22) Anmeldetag: **10.09.1993**

(54) **Thermoplastische Polymerformmassen mit flammwidrigen Eigenschaften**

Thermoplastic polymer moulding compositions with flame-retardant properties

Masses de moulage polymères thermoplastiques ayant des propriétés de résistance à la flamme

(84) Benannte Vertragsstaaten:
**DE ES FR GB IT NL**

(30) Priorität: **23.09.1992 DE 4231774**

(43) Veröffentlichungstag der Anmeldung:
**06.04.1994 Patentblatt 1994/14**

(73) Patentinhaber: **BAYER AG**
**51368 Leverkusen (DE)**

(72) Erfinder:
- **Eckel, Thomas, Dr.**
  **D-41539 Dormagen (DE)**
- **Ooms, Pieter, Dr.**
  **D-47800 Krefeld (DE)**
- **Wittmann, Dieter, Dr.**
  **D-51061 Köln (DE)**
- **Buysch, Hans-Josef, Dr.**
  **D-47809 Krefeld (DE)**

(56) Entgegenhaltungen:
**EP-A- 0 031 792**
**EP-A- 0 183 195**
**EP-A- 0 186 011**
**EP-A- 0 336 557**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 590 389 B1

## Beschreibung

Die vorliegende Erfindung beschreibt flammgeschützte, thermoplastische Formmassen, die aus mindestens einem thermoplastischen Polymeren A und einer Flammschutzmittelkombination aus Flammschutzadditiv und Alumosilikat bestehen.

Die Verwendung von Zeolithen in Flammschutzformulierungen für Polymere ist bekannt. In JP 83-137632 und JP 85-33206 (Chemical Abstract 103, 39407h) werden die Herstellung und Verwendung von Komplexen aus rotem Phosphor und Zeolithen als Flammschutzmittel beschrieben. Nachteilig ist dabei die erforderliche Verarbeitung des giftigen und labilen gelben Phosphors.

JP 85-192742 (CA 104, 130884z) beschreibt die Kombination von Zeolithen, halogenierten Phosphorverbindungen und Antimon und/oder Borderivaten in Polyolefinen. Die Verwendung des Synergisten Antimon ist aus ökologischer Sicht bedenklich. Außerdem wird der Einsatz der Flammschutzformulierungenin Vinylcopolymerisaten oder Polycarbonat-ABS-Mischungen in keiner Weise erwähnt.

EP-A 427 173 beschreibt Addukte von Zeolithen und anorganischen Halogeniden in Flammschutzformulierungen mit Hexabromcyclododecan.

JP 100 598 erwähnt die Verwendung von Zeolithen und bromhaltigen Flammschutzmitteln wie Tetrabromethan oder Tetrabrombisphenol A in PC/ABS-Blends. Nachteile zeigen sich aufgrund des Bromgehaltes bei höheren Verarbeitungsbedingungen und bei Wiederaufarbeitungen der Kunststoff-Mischungen.

Die Verwendung von Zeolithen und Phosphorverbindungen als Flammschutzmittel wird in keiner Weise erwähnt.

Aus EP-A 186 011 sind selbstverlöschende thermoplastische Polyesterformmassen, die Polyphenylenether enthalten, bekannt.

Aus EP-A 31 792 sind mit organischen chlor- oder bromhaltigen Verbindungen flammwidrig ausgerüstete Kunststoffformmassen bekannt.

EP-A 183 195 beschreibt selbstverlöschende thermoplastische Polyamid-Formmassen, die Polyphenylenether enthalten.

Es wurde nun gefunden, daß die Flammschutzmittelkombination aus einer Phosphorverbindung und einem Zeolithen in synergistischer Weise wirkt und bereits mit geringeren Mengen an Triphenylphosphat ein hoher Grad an Flammschutz (V-O bei 1,6 mm) erreicht wird bei Erhalt der übrigen technisch wichtigen Eigenschaften besonders der Kerbschlagzähigkeit.

Gegenstand der Erfindung sind flammwidrige thermoplastische Formmassen enthaltend

A) 100 Gew.-Teilen eines oder mehreren thermoplastischen Polymeren ausgewählt aus der Gruppe der

- thermoplastischen Polyester,
- thermoplastischen Polycarbonate,
- thermoplastischen Vinylcopolymerisate aus

  50 bis 98 Gew.-% Styrol, α-Methylstyrol, kernsubstituiertem Styrol, Methylmethacrylat oder Mischungen daraus und

  50 bis 2 Gew.-% Acrylnitril, Methacrylnitril, Methylmethacrylat, Maleinsäureanhydrid, N-substituiertem Maleinamid oder Mischungen daraus,

- Pfropfpolymerisate harzbildender Vinylmonomerer auf einen Kautschuk,

B) einer Flammschutzmittelkombination aus

B1) 0,1 bis 30 Gew.-Teilen Phosphorverbindungen gemäß Formel (VII)

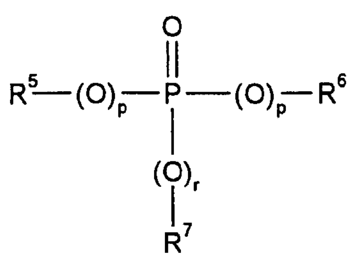

(VII)

wobei

$R^5$, $R^6$ und $R^7$ unabhängig voneinander $C_1$-$C_8$-Alkyl oder $C_5$- oder $C_6$-Cycloalkyl oder $C_6$-$C_{30}$-Aryl, welche $C_1$-$C_4$-alkylsubstituiert sein können und

p und r unabhängig voneinander 0 oder 1 sind,

oder Phosphorverbindungen der Formel (VIII)

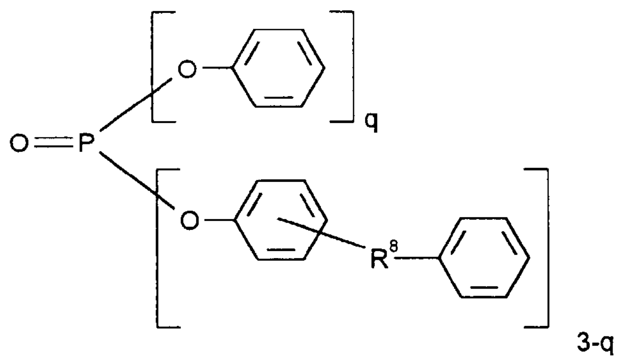

(VIII)

worin $R^8$ eine direkte Bindung, eine $-CH_2-$ ,

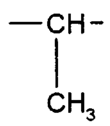

oder

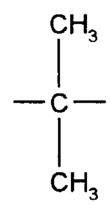

Gruppe ist,
und die Phenylreste Alkyl substituiert sein können und worin q 0,1 oder 2 ist, oder Komponente

B1) dimere und oligomere Phosphate ist, deren Molekulargewicht kleiner 2 000 g/mol ist, und

B2) 0,1 bis 15 Gew.-Teilen eines Alumosulikates.

Die erfindungsgemäße Mischung kann auch Antidrippingmittel sowie weitere Additive, die beispielsweise das Verarbeitungs- oder Entformungsverhalten verbessern, enthalten.

Thermoplastische Polymere A

Thermoplastische Polymere A können Homopolymere oder Copolymere von ethylenisch ungesättigten Monomeren oder Polymere aus bifunktionellen reaktiven Verbindungen sein. Erfindungsgemäße thermoplastische Polymere A können auch Mischungen verschiedener Polymerer sein.

Erfindungsgemäße thermoplastische Polymere A umfassen Homopolymere oder Copolymere von einem oder mehreren ethylenisch ungesättigten Monomeren (Vinylmonomeren) wie beispielsweise Vinylacetat, Styrol, α-Methylstyrol, kernsubstituierte Styrole, Acrylnitril, Methacrylnitril, Methylmethacrylat, Maleinsäureanhydrid, N-substituierte-Maleinimide, Chloropren, Butadien-1,3, Isopropen sowie $C_1$-$C_8$-Alkylacrylate und -Methacrylate.

Als Vinylpolymerisate kommen in Frage:

- kautschukfreie Vinylpolymerisate (A.1)
- kautschukhaltige Vinylpolymerisate wie Pfropfpolymerisate von Vinylmonomeren auf einen Kautschuk (A.2)
- Mischungen aus kautschukfreien und kautschukhaltigen Vinylpolymerisaten.

Die Copolymeriste A.1 sind harzartig, thermoplastisch und kautschukfrei.
Bevorzugte Vinyl-Copolymerisate A.1 sind solche aus

A.1.1 50 bis 98 Gew.-% Styrol, α-Methylstyrol, kernsubstituiertem Styrol, Methylmethacrylat oder Mischungen daraus und

A.1.2 50 bis 2 Gew.-% Acrylnitril, Methacrylnitril, Methylmethacrylat, Maleinsäureanhydrid, N-substituiertes Maleinimid oder Mischungen daraus.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die Styrol-Acrylnitril-Copolymerisate A.1 sind bekannt und lassen sich durch radikalische Polymerisation, insbesondere durch Emulsions-, Suspensions-, Lösungs- oder Massepolymerisation herstellen. Die Copolymerisate A.1 besitzen vorzugsweise Molekulargewichte $\overline{M}_W$ (Gewichtsmittel, ermittelt durch Lichtstreuung oder Sedimentation) von 15.000 bis 200.000.

Weitere besonders bevorzugte Copolymerisate A.1 sind statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden. Ihre Zusammensetzung kann innerhalb weiter Grenzen variiert werden. Bevorzugt enthalten sie 5 bis 25 Gew.-% Maleinsaureanhydrid-Einheiten.

Anstelle von Styrol können die Polymeren auch kernsubstituierte Styrole, wie p-Methylstyrol, Vinyltoluol, 2,4-Dimethylstyrol und andere substituierte Styrole, wie α-Methylstyrol, enthalten.

Ihre Molekulargewichte (Zahlenmittel Rn) sind bevorzugt 60.000 bis 200.000. Bevorzugt besitzen sie eine Grenzviskosität von 0,3 bis 0,9 (gemessen in Dimethylformamid bei 25°C; siehe hierzu Hoffmann, Krömer, Kuhn, Polymeranalytik I, Stuttgart, 1977, Seite 316 ff.)

Die Vinylpolymerisate A.2 sind thermoplastisch und kautschukhaltig. Bevorzugte Vinylpolymerisate A.2 stellen Pfropfpolymerisate dar. Diese umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinylacetat und $C_1$-$C_8$-Alkylacrylate und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Bevorzugte Polymerisate A.2 sind partiell vernetzt und besitzen Gelgehalte von über 20 Gew.-%, vorzugsweise über 40 Gew.-%, insbesondere über 60 Gew.- %.

Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind, ferner ABS-Polymerisate, wie sie z.B. in der DE-OS 2 035 390 (= US-PS 3 644 574) oder in der DE-OS 2 248 242 (= GB-PS 1 409 275) beschrieben sind.

Bevorzugte Vinylpolymerisate A.2 sind Pfropfpolymerisate aus:

A.2.1 5 bis 95, vorzugsweise 30 bis 80, Gew.-Teilen, einer Mischung aus

A.2.1.1 50 bis 95 Gew.-Teilen Styrol, α-Methylstyrol, alkylkernsubstituierten, vorzugsweise methylkernsubstituierten Styrolen, $C_1$-$C_8$-Alkylmethacrylaten, vorzugsweise Methylmethacrylat, $C_1$-$C_8$-Alkylacrylaten, vorzugsweise Methacrylat oder Mischungen dieser Verbindungen und

A.2.1.2 5 bis 50 Gew.-Teilen Acrylnitril, Methacrylnitril, $C_1$-$C_8$-Alkylmethacrylaten, vorzugsweise Methylmethacrylat, $C_1$-$C_8$-Alkylacrylat, vorzugsweise Methacrylat, Maleinsauranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70, Gew.-Teile Kautschuk-Polymerisat mit einer Glasübergangstemperatur unter -10°C, vorzugsweise ein Dien-, Acrylat-, Silikon- oder Ethylen-Propylen-Dien-Kautschuk, insbesondere Polybutadien,

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von

Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, Acrylsäureester oder Methacrylsäureester und 50 bis 90, vorzugsweise 65 bis 80 Gew.-%, bezogen auf Gemisch, Styrol (als Pfropfauflage A.2.1) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (als Pfropfgrundlage A.2.2),

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats A.2 0,05 bis 2 µm, vorzugsweise 0,1 bis 0,6 µm beträgt.

Acrylsäureester bzw. Methacrylsäureester sind Ester der Acrylsäure oder Methacrylsäure und einwertiger Alkohole mit 1 bis 8 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropfgrundlage (Dimensionslose Zahl).

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (w. Scholtan, H. Lange, Kolloid, Z. und Z. Polymere 250 (1972), 782-796) bestimmt werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C als Pfropfgrundlage A.2.2 und

δ. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hatten, als Pfropfmonomere A.2.1.

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A. 2 können nach bekannten Verfahren wie Masse-, Suspensions-, Emulsions- oder Masse-Suspensionsverfahren hergestellt werden.

Die thermoplastischen Polymere A können auch Polymere sein, die durch Polykondensation aus mindestens einer reaktiven Verbindung hergestellt worden sind: Polycarbonate und Polyester.

Auch Mischungen verschiedener, durch Polykondensation hergestellter Polymere, sind geeignet.

Bevorzugte Polycarbonate sind solche auf Basis der Diphenole der Formel (I)

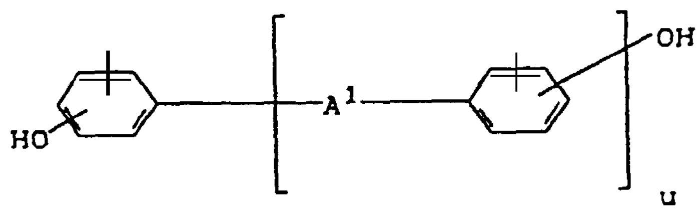

(I),

worin

$A^1$ eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

u 1 oder 0 sind.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach dem Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol oder p-tert.-Butylphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenol mit insgesamt 8-20 C-Atomen in den Alkylsubstituenten gemäß deutscher Patentanmeldung P 3 506 472.2 (Le A 23 654), wie 3,5-di-tert.-Butylphenol, p-iso-Octylphenol, p-tert.-Octyl-phenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole (I).

Die erfindungsgemäß geeigneten Polycarbonate A haben mittlere Molekulargewichte ($\overline{M}w$, Gewichtsmittel, gemessen z.B. durch Ultrazentrifugation oder Streulichtmessung) von 10 000 bis 200 000, vorzugsweise von 20 000 bis 80 000.

Geeignete Diphenole der Formel (I) sind z.B. Hydrochinon, Resorcin, 4,4'-Dihydroxydiphenyl, 2,2-Bis(4-hydroxyphenyl)-propan, 2,4-Bis-(4-hydroxyphenyl)-2-methylbutan, 1,1-Bis-(4-hydroxyphenyl)-cyclohexan.

Bevorzugte Diphenole der Formel (I) sind 2,2-Bis-(4-hydroxyphenyl)-propan, 2,2-Bis-(3,5-dibrom-4-hydroxyphenyl)-propan und 1,1-Bis-(4-hydroxyphenyl)-cyclohexan.

Bevorzugte Diphenole sind auch alkylsubstituierte Dihydroxydiphenylcycloalkane der Formel (II),

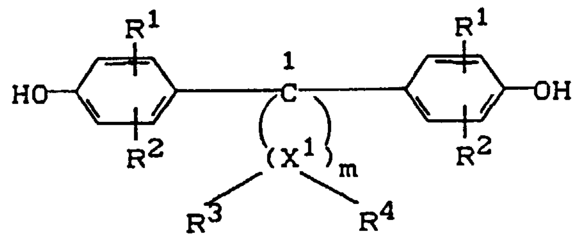

(II)

worin

| | |
|---|---|
| $R^1$ und $R^2$ | unabhängig voneinander Wasserstoff, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl (vorzugsweise Methyl), |

und

| | |
|---|---|
| $X^1$ | Kohlenstoff bedeuten,<br>mit der Maßgabe, daß an mindestens einem Atom $X^1$ $R^3$ und $R^4$ gleichzeitig Alkyl bedeuten. |

Die erfindungsgemäß geeigneten Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Mol-Summen an Diphenolen, an 2,2-Bis-(3,5-dibrom-4-hydroxyphenyl)-propan.

Die Polycarbonate A können teilweise oder vollständig durch aromatische Polyestercarbonate ersetzt werden.

Bevorzugte Polyester A sind Polyalkylenterephthalate. Diese sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch), Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandimethanol-1,4, 3-Methylpentandiol-1,3 und 1,6, 2-Ethylhexandiol-1,3, 2,2 -Diethylpropandiol-1,3, Hexandiol-2,5, 1-4-Di (β-hydroxyethoxyphenyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentraerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In der Copolyestern können die verschiedenen Diolreste in Form von Blöcken oder statistisch verteilt vorliegen.

Die Polyalkylenterephthalate besitzen im allgemeinen eine Intrinsic-Viskosität von 0,4 bis 1,4 dl/g, vorzugs weise 0,5 bis 1,3 dl/g, insbesondere 0,6 bis 1,2 dl/g, jeweils gemessen in Phenol/o-Dichlorbenzol (1:1 Gew.-Tl.) bei 25°C.

Bevorzugte thermoplastische Polymere A sind auch Mischungen von Polyalkylenterephthalaten mit aromatischen Polycarbonaten.

Flammschutzmittelkombination B:

Die Flammschutzmittelkombination B besteht aus dem Flammschutzadditiv B.1 und dem Alumosilikat B.2.

Als Flammschutzadditive B.1 geeignet sind die oben genannten Phosphorverbindungen.

Die erfindungsgemäß einzusetzenden Phosphorverbindungen sind als solche literaturbekannt oder nach bekannten Verfahren herzustellen (siehe beispielsweise Ullmann, Enzyklopädie der technischen Chemie, Band 18, Seiten

301 ff, 1979).

Phosphorverbindungen sind solche der Formel (VII)

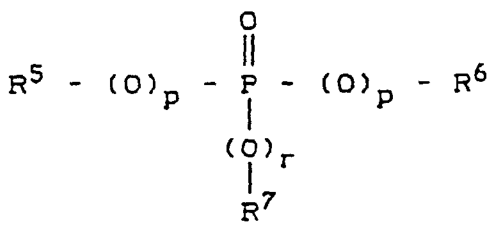

(VII)

in denen $R^5$, $R^6$ und $R^7$ unabhängig voneinander $C_1$-$C_8$-Alkyl oder gegebenenfalls $C_1$-$C_4$-alkyliertes $C_5$- oder $C_6$-Cycloalkyl oder gegebenenfalls alkyliertes und/oder aralkyliertes $C_6$-$C_{30}$-Aryl, und "p" und "r" unabhängig voneinander 0 oder 1 sind.

$C_1$-$C_8$-Alkylreste gemäß (VII) können linear oder verzweigt sein. Beispiele für Alkylreste sind Butyl, Methyl oder Octyl.

Gegebenenfalls alkylierte $C_5$- oder $C_6$-Cycloalkyle gemäß (VII) sind gegebenenfalls einfach bis mehrfach alkylierte $C_5$- oder $C_6$-Cycloalkyle, also z.B. Cyclopentyl, Cyclohexyl, 3,3,5-Trimethylcyclohexyl.

Gegebenenfalls alkylierte und/oder aralkylierte $C_6$-$C_{30}$-Arylreste gemäß (VII) sind gegebenenfalls ein oder mehrkernig, einfach oder mehrfach alkyliert und/oder aralkyliert, z.B. Phenyl, Kresyl, Isopropylphenyl, benzyl-substituiertes Phenyl und Naphthyl.

Beispiele für halogenfreie Phosphorverbindungen gemäß Formel (VII) sind Tributylphosphat, Triphenylphosphat, Trikresylphosphat, Diphenylkresylphosphat, Phenyldikresylphosphat, Diphenyloctylphosphat, Diphenyl-2-ethylkresylphosphat, Tri-(isopropylphenyl)phosphat, Tri-(butylphenyl)phosphat, Tris-(p-benzyl-phenyl)phosphat, Triphenylphosphinoxid, Methanphosphonsäurediethylester, Methanphosphonsäurediphenylester, Methanphosphonsäuredimethylester, Methanphosphonsäuredipentylester und Phenylphosphonsäurediethylester.

Die aralkylierten Phosphorverbindungen sind beispielsweise in EP-A 351 648 beschrieben und umfassen Phosphorverbindungen der Formel (VIII),

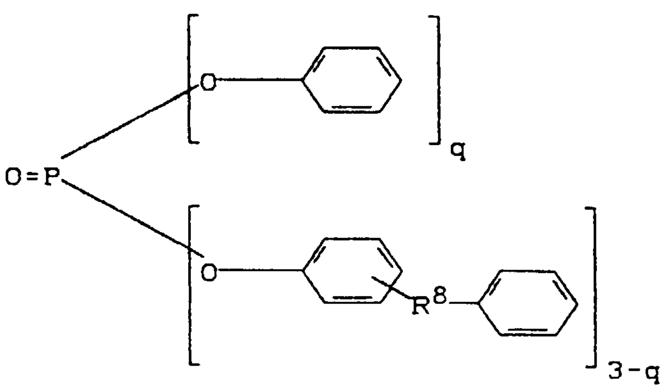

(VIII)

worin $R^8$ eine direkte Bindung, eine $-CH_2-$,

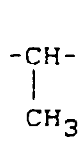

oder

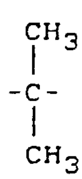

Gruppe ist, und die Phenylreste auch Alkyl, vorzugsweise Methyl, substituiert sein können und worin q 0,1 oder 2 ist.

Geeignete Flammschutzmittel sind auch dimere und oligomere Phosphate, deren Molekulargewichte kleiner 2000 g/mol, vorzugsweise kleiner 1000 g/mol ist. Diese sind beispielsweise in der europäischen Anmeldung EP-A 363 608 beschrieben.

Alumosilikate B.2 im Sinne der Erfindung sind Zeolithe und Tonerden (Schichtsilikate).

Bei Zeolithen handelt es sich um kristalline Alumosilikate, synthetisiert oder natürlich vorkommend, mit Gerüststruktur (siehe D.W. Breck in "Zeolithe Molecular Sieves", Wiley Interscience, 1974, S. 133-180; Ullmanns Enzyklopädie der technischen Chemie, 4. Auflage, Band 17, S. 9-18, Verlag Chemie, Weinheim, New York).

Geeignete Zeolithe sind insbesondere Verbindungen der allgemeinen Formel

$$M_{2/n}O \cdot Al_2O_3 \cdot xSiO_2 \cdot yH_2O$$

in welcher

M für Wasserstoff-oder Metallkationen der Gruppen Ia, IIa, IIIa, IVa, Va, VIa, VIIa, VIIIa, Ib, IIb, IIIb, und IVb des Periodensystem nach Wasserstoffion bevorzugt für Protonen oder Metallkationen der Gruppen Ia, IIa, IIb, IIIb, IVa und IVb, besonders bevorzugt für Wasserstoffion oder Metallkationen der Gruppen Ia, IIa, IIb und IIIb, ganz besonders bevorzugt für Protonen oder die Ionen $Na^+$, $K^+$, $Ca^+$, $Mg^{2+}$ und $Zn^{2+}$ steht,

n für die Wertigkeit des Kations steht,

x für das Molverhältnis $SiO_2/Al_2O_3$ steht, wobei x eine Zahl von 1 bis 50, bevorzugt 2 bis 25 sein kann, und

y für eine Zahl von 0 bis 9 steht.

Geeignet für das erfindungsgemäße Verfahren sind Zeolithe der Struktur A, X, Y (Faujasit-Typ), L, ZSM 5, 11, 22, 23, Mordenit, Offretit, Phillipsit, Sodalith, Omega und zeolithähnliche Materialien wie AlPO's und SAPO's, besonders geeignet sind Zeolithe der Struktur A, X, Y (Faujasit-Typ), ZSM 5, 11, L, Mordenit, Offretit, Omega und SAPO 5, 11, ganz besonders geeignet sind Zeolithe der Struktur ZSM 5 und Mordenit.

Die erfindungsgemäß einzusetzenden Tonerden sind bekannt, siehe z.B. Kirk-Othmer "Encyclopedia of Chemical Technology" 2nd Ed. 1964, Vol. 5, S. 541-561.

Kaolin-Typen wie Kaolinit, Dickerit, Nacrit (alle $Al_2O_3$ x 2 $SiO_2$ x 2 $H_2O$) oder Anauxit ($Al_2O_3$ x 3 $SiO_2$ x 2 $H_2O$) oder Halloysit ($Al_2O_3$ x 2 $SiO_2$ x 2 $H_2O$) oder Endellit ($Al_2O_3$ x 2 $SiO_2$ x 4 $H_2O$) sowie die durch Erhitzen aus den Kaolintypen hergestellten Spinell-Typen sind ebenfalls geeignet (vgl. Kirk-Othmer, "Encyclopedia of Chemical Technology" 2nd Ed. 1964 Vol. 5, Seite 541-561).

Ferner sind Serpentin-Typen geeignet, in denen 3 Mg-Ionen 2 Al-Ionen - ausgehend von den Kaolin-Typen-ersetzt haben ($Mg_3Si_2O_5(OH)_4$). Zu den Serpentin-Typen gehören ferner Amesit (($Mg_2Al$)(SiAl)$O_5(OH)_4$) und Cronstedit ($Fe_2^{2+}Fe^{3+}$) $SiFe^{3+}$)$O_5(OH_4)$ sowie Chamosit ($Fe^{2+}$, $Mg)_{2.3}$ ($Fe^{3+}Al)_{0,7}$ ($Si_{1.14}Al_{0.86})O_5(OH)_4$ sowie die z.T. auch synthetisch zugänglichen Nickel- oder Kobaltspezies.

Weiterhin können Alumosilikate des Montmorillonit-Typs eingesetzt werden wie z.B.

| | |
|---|---|
| Montmorillonit | $[Al_{1.67}Mg_{0.33}(Na_{0.33})Si_4O(OH)_2$ |
| Beidellit | $Al_{2.17}[Al_{0.33}(Na_{0.33})Si_{3.17}]O_{10}(OH)_2$ |
| Nontronit | $Fe^{3+}[Al_{0.33}(Na_{0.33})Si_{3.67}]O_{10}(OH)_2$ |
| Hectorit | $Mg_{2.67}Li_{0.33}(Na_{0.33})Si_4O_{10}(OH,F)_2$ |
| Saponit | $Mg_{3.0}[Al_{0.33}(Na_{0.33})Si_{3.67}]O_{10}(OH)_2$ |
| Sauconit | $[Zn_{1.48}Mg_{0.14}Al_{0,74}Fe^{3+}][Al_{0.99}Si_{3.01}]$ $O_{10}(OH)_2X_{0.33}$ |

sowie $Cu^{2+}$, $Cn^{2+}$ oder $Ni^{2+}$-haltige Typen (X = Halogen) wie Volkonskoit, Medmontit oder Pimelit.

Derartige Tonerden können für sich oder als Gemisch von 2 oder mehreren Tonerden verwendet werden und können die für diese Naturprodukte üblichen Verunreinigungen enthalten, wie sie z.B. in Bentonit üblich sind (= Montmorillonite mit Resten Feldspat, Quarz etc.).

Bevorzugt sind die als "Montmorillonit-Typen" beschriebenen Tonerden und besonders bevorzugt Montmorillonit selbst.

Die beschriebenen Alumosilikate können in nativer Form, teilgetrocknetem Zustand oder gegebenenfalls auch sauer aktiviert eingesetzt werden. Die saure Aktivierung wird durch Behandlung mit Säuren, bevorzugt Mineralsäuren, vorgenommen.

Es können auch beliebige Mischungen der vorgenannten Zeolithe und/oder Tonerden eingesetzt werden.

Die erfindungsgemäßen Formmassen können zusätzlich höhermolekulare Additive, Glasfaser oder Polymere, die nicht thermoplastisch verarbeitbar sind wie beispielsweise Polytetrafluorethylen, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den Flammschutz-Additiven und den Alumosilikaten Vormischungen herzustellen.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind:

Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Thermoplastische Polymere A

A1 Lineares Bisphenol A-Polycarbonat mit einer relativen Lösungsviskosität von 1,26 bis 1,28 (gemessen in Methylenchlorid bei 25°C, Konzentration 0,5 g/100 ml.

A2 Styrol/Acrylnitril-Copolymeriat (Styrol/Acrylnitril-Gew.-Verhältnis 72:28) mit einer Grenzviskosität von 0,55 dl/g (Messung in Dimethylformamid bei 20°C).

A3 Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

A4 Pfropfpolymerisat A3 + Polytetrafluorethylen Das Tetrafluorethylenpolymerisat (PTFE) wird als koagulierte Mischung aus einer SAN-Pfropfpolymerisat-Emulsion gemäß A3 in Wasser und einer Tetrafluorethylenpolymerisat-Emulsion in Wasser eingesetzt. Das Gewichtsverhältnis Pfropfpolymerisat A3 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser ($d_{50}$) des pulverförmigen PTFE liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

Komponente B

B.a Triphenylphosphat/Zeolith-Mischung (Gewichtsverhältnis 3:1)

Herstellung:

300 Gew.-Teile Triphenylphosphat (TPP) und 100 Gew.-Teile Z eines frisch aktivierten Zeoliths (ZSM 5) wurden 2 h auf 200°C erhitzt. Nach Abkühlen wird das Gemisch in einer handelsüblichen Mischvorrichtung (z.B. Starmix) gemahlen.

B.b Vergleich:

Triphenylphosphat (Molekulargewicht 326,3 g/mol),

Herstellung und Prüfung der erfindungsgemäßen Formmassen

Die Bestandteile A und B wurden auf einem 3 1-Innenkneter bei Temperaturen von 210 bis 250°C aufgeschmolzen und homogenisiert.

Von den Formmassen wurden auf einer Spritzgußmaschine Stäbe der Abmessung 80 x 10 x 4 $mm^3$ (Verarbeitungstemperatur: 260°C) hergestellt, an denen die Kerbschlagzähigkeit (nach Methode ISO 180) bei Raumtemperatur gemessen wurde.

Die Bestimmung der Wärmeformbeständigkeit nach Vicat B erfolgte gemäß DIN 53 460.

Das Brandverhalten der Proben wurde nach UL-Subj. 94 V an Stäben der Abmessung 127 x 12,7 x 1,6 mm gemessen, hergestellt auf einer Spritzgußmaschine bei 280°C.

Der UL 94 V-Test wird wie folgt durchgeführt:

Substanzproben werden zu Stäben der Abmessung 127 x 12,7 x 1,6 mm geformt. Die Stäbe werden vertikal so montiert, daß die Unterseite des Probekörpers sich 305 mm über einen Streifen Verbandstoff befindet. Jeder Probetab wird einzeln mittels zweier aufeinanderfolgenden Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von $3,73 \times 10^4$ kJ/m$^3$ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinaus zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierung bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Eine Zusammenstellung der Eigenschaften der erfindungsgemäßen Formmassen findet sich in nachfolgender Tabelle.

Tabelle 1: Zusammensetzung und Eigenschaften der Formmassen

| Beispiel | Komponenten A1 | A2 | A3 | A4 | B.a | B.b | effekt. TPP-gehalt [Gew.-Teile] | UL94V 1,6 mm 1) | $a_K$ [$kJ/m^2$] | Vicat B 120 [°C] |
|---|---|---|---|---|---|---|---|---|---|---|
| | [Gew.-Teile] | | | | | | | | | |
| 1 | 67 | 10 | 7,5 | 3,5 | 16 | - | 12 | V-0 | 32 | 90 |
| 2 | 67 | 10 | 7,5 | 3,5 | 12 | - | 9 | V-0 | 44 | 100 |
| 3 | 67 | 10 | 7,5 | 3,5 | 9 | - | 6,75 | V-0 | 50 | 110 |
| 4 (Vergl.) | 67 | 10 | 7,5 | 3,5 | - | 12 | 12 | V-0 | 41 | 90 |
| 5 (Vergl.) | 67 | 10 | 7,5 | 3,5 | - | 10 | 10 | V-1 | 41 | 96 |
| 6 (Vergl.) | 67 | 10 | 7,5 | 3,5 | - | 8 | 8 | n.B. | 43 | 102 |
| 7 (Vergl.) | 67 | 10 | 7,5 | 3,5 | - | 6 | 6 | n.B. | 48 | 109 |

1) Konditionierung der Prüfkörper 7 Tage bei 23°C und 50 % rel. Luftfeuchte

Aus den Beispielen 1 bis 3 wird deutlich, daß eine Flammschutzmittelkombination aus Zeolith und Triphenylphosphat in synergistischer Weise wirkt und die benötigte Triphenylphosphat-Menge deutlich reduziert, was zu einem ausgewogenen Eigenschaftsbild aus hoher Kerbschlagzähigkeit und hoher Wärmeformbeständigkeit führt.

Ein Vergleich des Versuchs 5 (10 % TPP-Gehalt) mit dem erfindungsgemäßen Beispiel 2 (9 % TPP-Gehalt) zeigt, daß ohne zugesetzten Zeolith trotz des höheren Gehaltes an Flammschutzadditiv keine V-O-Bewertung resultiert.

**Patentansprüche**

**1.** Flammwidrige thermoplastische Formmassen bestehend aus

A) 100 Gew.-Teilen eines oder mehreren thermoplastischen Polymeren ausgewählt aus der Gruppe der

- thermoplastischen Polyester,
- thermoplastischen Polycarbonate,
- thermoplastischen Vinylcopolymerisate aus

50 bis 98 Gew.-% Styrol, α-Methylstyrol, kernsubstituiertem Styrol, Methylmethacrylat oder Mischungen daraus und

50 bis 2 Gew.-% Acrylnitril, Methacrylnitril, Methylmethacrylat, Maleinsäureanhydrid, N-substituiertem Maleinamid oder Mischungen daraus,

- Pfropfpolymerisate harzbildender Vinylmonomerer auf einen Kautschuk,

B) einer Flammschutzminelkombination aus

B1) 0,1 bis 30 Gew.-Teilen Phosphorverbindungen gemäß Formel (VII)

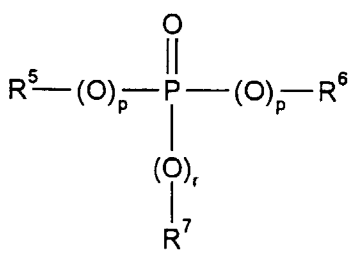

(VII)

wobei

$R^5$, $R^6$ und $R^7$ unabhängig voneinander $C_1$-$C_8$-Alkyl oder $C_5$- oder $C_6$-Cycloalkyl oder $C_6$-$C_{30}$-Aryl, welche $C_1$-$C_4$-alkylsubstituiert sein können und

p und r unabhängig voneinander 0 oder 1 sind,

oder Phosphorverbindungen der Formel (VIII)

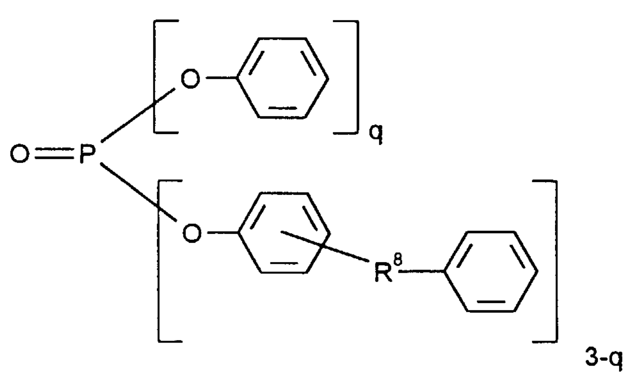

(VIII)

worin $R^8$ eine direkte Bindung, eine $-CH_2-$ ,

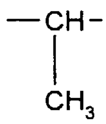 oder 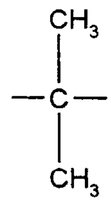

Gruppe ist, und die Phenylreste Alkyl substituiert sein können und worin q 0,1 oder 2 ist, oder Komponente

B1) dimere und oligomere Phosphate ist, deren Molekulargewicht kleiner 2 000 g/mol ist, und

B2) 0,1 bis 15 Gew.-Teilen eines Alumosulikates.

**2.** Formmassen gemäß Anspruch 1, enthaltend als Komponente A Pfropfpolymerisate aus

A.2.1 5 bis 95 Gew.-Teilsn einer Mischung aus

A.2.1.1 50 bis 95 Gew.-Teilen Stryrol, α-Methylstyrol, alkylsubstituierten Styrolen, $C_1$-$C_8$-Alkylmethacrylaten, $C_1$-$C_8$-Alkyl-acrylaten, oder Mischungen dieser Verbindungen und

A.2.1.2 5 bis 50 Gew.-Teilen Acrylnitril, Methacrylnitril, $C_1$-$C_8$-Alkylmethacrylaten, $C_1$-$C_8$-Alkylacrylat, Maleinsäuranhydrid, $C_1$-$C_4$-alkyl- bzw. phenyl-N-substituierten Maleinimiden oder Mischungen dieser Verbindungen auf

A.2.2 5 bis 95 Gew.-Teile Kautschuk-Polymerisat mit einer Glasübergangstemperatur unter -10°C.

**3.** Formmassen gemäß Anspruch 2, worin der Kautschuk ein Dienkautschuk, Acrylatkautschuk, Silikonkautschuk oder Ethylen-Propylen-Dien-Kautschuk ist.

**4.** Formmassen gemäß Anspruch 1, worin Komponente B.2 Alumosilikate der Formel

$$M_{2/n}O \cdot Al_2O_3 \cdot xSiO_2 \cdot yH_2O$$

in welcher

M für das Wasserstoffion oder Metallkationen der Gruppen Ia, IIa, IIIa, IVa, Va, VIa, VIIa, VIIIa, Ib, IIb, IIIb, und IVb des Periodensystem nach Wasserstoffion bevorzugt für Protonen oder Metallkationen der Gruppen Ia, IIa, IIb, IIIb, IVa und IVb, besonders bevorzugt für Wasserstoffion oder Metallkationen der Gruppen Ia, IIa, IIb und IIIb, ganz besonders bevorzugt für Protonen oder die Ionen $Na^+$, $K^+$, $Ca^+$, $Mg^{2+}$ und $Zn^{2+}$ steht,

n für die Wertigkeit des Kations steht,

x für das Molverhältnis $SiO_2/Al_2O_3$ steht, wobei x eine Zahl von 1 bis 50, bevorzugt 2 bis 25 sein kann, und

y für eine Zahl von 0 bis 9 steht

oder Tonerden des Kaolin-, Serpentin-, Montmorillonit und Bentonit-Typs.

**5.** Formmassen gemäß Anspruch 1, worin die Komponente B.2 Alumosilikate des Typ ZSM 5 sind.

**6.** Formmassen gemäß Anspruch 1, die zusätzliche Additive, Glasfaser oder Polymer, die nicht thermoplastisch verarbeitbar sind, enthalten.

## Claims

**1.** Flame resistant thermoplastic moulding compositions consisting of

A) 100 parts by weight of one or more thermoplastic polymers selected from the group comprising

- thermoplastic polyesters,
- thermoplastic polycarbonates,
- thermoplastic vinyl copolymers prepared from

  50 to 98 wt.% of styrene, α-methylstyrene, ring-substituted styrene, methyl methacrylate or mixtures thereof and

  50 to 2 wt.% of acrylonitrile, methacrylonitrile, methyl methacrylate, maleic anhydride, N-substituted maleimide or mixtures thereof,

- graft polymers of resin-forming vinyl monomers on a rubber,

B) a flame retardant combination prepared from

B1) 0.1 to 30 parts by weight of phosphorus compounds of the formula (VII)

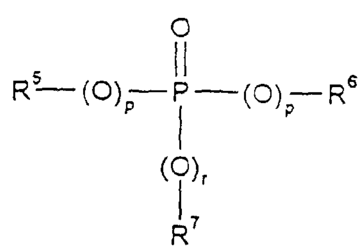

(VII)

wherein

$R^5$, $R^6$ and $R^7$ are mutually independently $C_1$-$C_8$ alkyl or $C_5$ or $C_6$ cycloalkyl or $C_6$-$C_{30}$ aryl, which may be $C_1$-$C_4$ alkyl-substituted and

p and r are mutually independently 0 or 1,

or phosphorus compounds of the formula (VIII)

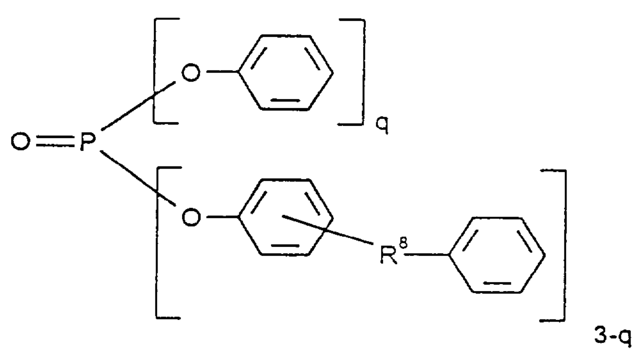

(VIII)

in which $R^8$ is a direct bond, a $-CH_2-$,

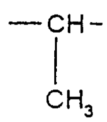

or

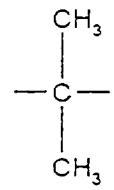

group, and the phenyl residues may be alkyl-substituted and in which q is 0, 1 or 2, or component

B1) comprises dimeric and oligomeric phosphates, the molecular weight of which is less than 2000 g/mol, and

B2) [is] 0.1 to 15 parts by weight of an aluminosilicate.

**2.** Moulding compositions according to claim 1, containing as component A graft polymers prepared from

A.2.1 5 to 95 parts by weight of a mixture of

A.2.1.1 50 to 95 parts by weight of styrene, α-methylstyrene, alkyl-substituted styrenes, $C_1$-$C_8$ alkyl methacrylates, $C_1$-$C_8$ alkyl acrylates or mixtures of these compounds and

A.2.1.2 5 to 50 parts by weight of acrylonitrile, methacrylonitrile, $C_1$-$C_8$ alkyl methacrylates, $C_1$-$C_8$ alkyl acrylate, maleic anhydride, $C_1$-$C_4$ alkyl or phenyl N-substituted maleimides or mixtures of these compounds on

A.2.2 5 to 95 parts by weight of rubber polymer having a glass transition temperature of below -10°C.

**3.** Moulding compositions according to claim 2, in which the rubber is a diene rubber, acrylate rubber, silicone rubber or ethylene/propylene/diene rubber.

**4.** Moulding compositions according to claim 1, in which component B.2 [comprises] aluminosilicates of the formula

$$M_{2/n}O \cdot Al_2O_3 \cdot xSiO_2 \cdot yH_2O$$

in which

M denotes the hydrogen ion or metal cations of groups Ia, IIa, IIIa, IVa, Va, VIa, VIIa, VIIIa, Ib, IIb, IIIb and IVb of Mendeleyev's periodic system, preferably protons or metal cations of groups Ia, IIa, IIb, IIIb, IVa and IVb, particularly preferably hydrogen ion or metal cations of groups Ia, IIa, IIb and IIIb, very particularly preferably protons or the ions $Na^+$, $K^+$, $Ca^{2+}$, $Mg^{2+}$ and $Zn^{2+}$,

n denotes the valency of the cation,

x denotes the molar ratio $SiO_2/Al_2O_3$, wherein x may be a number from 1 to 50, preferably from 2 to 25, and

y denotes a number from 0 to 9

or aluminas of the kaolin, serpentine, montmorillonite and bentonite type.

**5.** Moulding compositions according to claim 1, in which component B.2 comprises type ZSM 5 aluminosilicates.

**6.** Moulding compositions according to claim 1, which contain additional additives, glass fibres or polymers which are not melt processable.

## Revendications

**1.** Masses de moulage thermoplastiques ignifuges consistant en

A) 100 parties en masse d'un ou plusieurs polymères thermoplastiques choisis dans le groupe des

- polyesters thermoplastiques
- polycarbonates thermoplastiques,
- copolymères vinyliques thermoplastiques constitués par

50 à 98 % en masse de styrène, d'a-méthylstyrène, de styrène substitué sur le noyau, de méthacrylate de méthyle ou de mélanges de ceux-ci, et
50 à 2 % en masse d'acrylonitrile, de méthacrylonitrile, de méthacrylate de méthyle, d'anhydride maléique, de maléamide N-substitué ou de mélanges de ceux-ci,

- polymères greffés de monomères vinyliques formateurs de résines sur un caoutchouc,

B) une combinaison d'agents d'ignifugation constituée par

B1) 0,1 à 30 parties en masse de composés du phosphore selon la formule (VII)

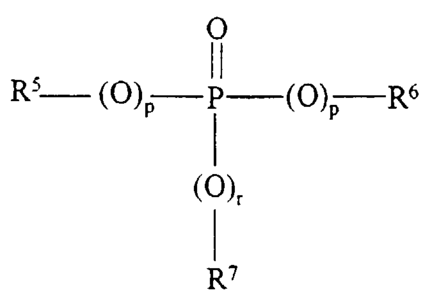

(VII)

où

$R^5$, $R^6$ et $R^7$ représentent indépendamment les uns des autres alkyle en $C_1$-$C_8$ ou cycloalkyle en $C_5$ ou $C_6$ ou aryle en $C_6$-$C_{30}$, qui peuvent être substitués par alkyle en $C_1$-$C_4$ et
p et r représentent indépendamment l'un de l'autre 0 ou 1,
ou de composés du phosphore de formule (VIII)

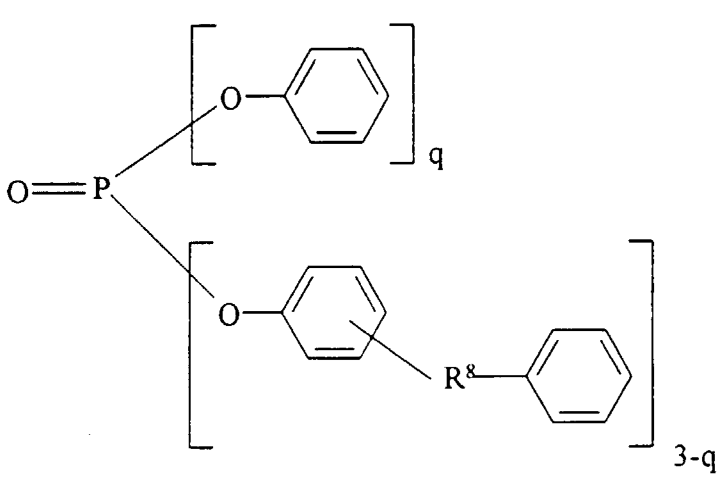

(VIII)

où $R^8$ représente une liaison directe, un groupe $-CH_2-$,

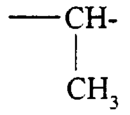

ou

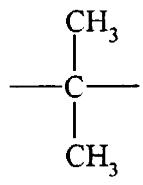

et les restes phényle peuvent être alkyl-substitué et où q représente 0, 1 ou 2, ou le composant

B1) est constitué par des phosphates dimères et oligomères dont la masse moléculaire est inférieure à 2 000 g/mol, et

B2) 0,1 à 15 parties en masse d'un aluminosilicate

**2.** Masses de moulage suivant la revendication 1, contenant comme composant A des polymères greffés constitués par

A.2.1 5 à 95 parties en masse d'un mélange de

A.2.1.1 50 à 95 parties en masse de styrène, d'$\alpha$-méthylstyrène, de styrènes alkyl-substitués, de méthacrylates d'alkyle en $C_1$-$C_8$, d'acrylates d'alkyle en $C_1$-$C_8$, ou de mélanges de ces composés et

A.2.1.2 5 à 50 parties en masse d'acrylonitrile, de méthacrylonitrile, de méthacrylates d'alkyle en $C_1$-$C_8$, d'acrylate d'alkyle en $C_1$-$C_8$, d'anhydride maléique, de maléimides N-substitués par alkyle en $C_1$-$C_4$ ou phényle ou des mélanges de ces composés sur

A.2.2 5 à 95 parties en masse de polymère de caoutchouc ayant une température de transition vitreuse inférieure à -10°C.

**3.** Masses de moulage selon la revendication 2 dans lesquelles le caoutchouc est un caoutchouc diénique, un caoutchouc d'acrylate, un caoutchouc de silicone ou un caoutchouc éthylène-propylène-diène.

**4.** Masses de moulage selon la revendication 1 dans lesquelles le composant B.2 représente des aluminosilicates de formule

$$M_{2/n}O \cdot Al_2O_3 \cdot xSiO_2 \cdot yH_2O$$

dans laquelle

M représente l'ion hydrogène ou des cations de métaux des groupes Ia, IIa, IIIa, IVa, Va, VIa, VIIa, VIIIa, Ib, IIb, IIIb et IVb du système périodique après l'ion hydrogène, de préférence des protons ou des cations de métaux des groupes Ia, IIa, IIb, IIIb, IVa et IVb, de préférence encore l'ion hydrogène ou des cations de métaux des groupes Ia, IIa, IIb et IIIb, de manière particulièrement préférée des protons ou les ions $Na^+$, $K^+$, $Ca^+$, $Mg^{2+}$ et $Zn^{2+}$,

n représente la valence du cation,

x représente le rapport molaire $SiO_2/Al_2O_3$, x pouvant être un nombre de 1 à 50, de préférence de 2 à 25, et

y représente un nombre de 0 à 9

ou des alumines de type kaolin, serpentine, montmorillonite et bentonite.

**5.** Masses de moulage selon la revendication 1 dans lesquelles le composant B.2 représente des aluminosilicates de type ZSM 5.

**6.** Masses de moulage selon la revendication 1 qui contiennent en outre des additifs, des fibres de verre ou des polymères qui ne peuvent pas être mis en oeuvre de manière thermoplastique.